# EUROPÄISCHE PATENTANMELDUNG

(11) **EP 1 635 514 A1**
(43) Veröffentlichungstag der Anmeldung: **15.03.2006**
(21) Anmeldenummer: 04021493.4
(22) Anmeldetag: 09.09.2004
(51) Int. Cl.: H04L 12/56, H04L 29/06

(54) **Datenverarbeitungsgerät und Ad-hoc-Netzwerk mit Presence-Information**

(71) Anmelder: SIEMENS AKTIENGESELLSCHAFT, 80333 München (DE)
(72) Erfinder: Aschauer, Rudolf, 1020 Wien (AT); Dorn, Christoph, 1090 Wien (AT); Ploninger, Christian, 1210 Wien (AT)

(57) **Zusammenfassung**

Die Erfindung betrifft ein Datenverarbeitungsgerät (DV1, ..., DV13) zum Einsatz in einem Kommunikations-Netzwerk (NW1, ..., NW5) mit weiteren Datenverarbeitungsgeräten (DV1, ..., DV13), mit einer Anwendung (AP1, ..., AP4) zur Verarbeitung von Zustandsinformationen. Dabei ist das Datenverarbeitungsgerät (DV1, ..., DV13) mit einer ersten Datenbank (DBI1, DBI2) zur Speicherung eigener Zustandsinformationen ausgestattet und mit einer zweiten Datenbank (DBE1, DBE2) zur Speicherung von weiteren Zustandsinformationen der weiteren Datenverarbeitungsgeräte (DV1, ..., DV13) versehen. Weiter ist das Datenverarbeitungsgerät (DV1, ..., DV13) mit einer Benachrichtigungseinrichtung zur Übermittlung der eigenen Zustandsinformationen an die weiteren Datenverarbeitungsgeräten (DV1, ..., DV13) ausgerüstet, und die Anwendung (AP1, ..., AP4) ist mittels einer Schnittstelle (SI1, SI2) mit der ersten und mit der zweiten Datenbank verbunden, wobei die Anwendung (AP1, ..., AP4) zur Weiterverarbeitung der weiteren Zustandsinformationen und zur Generierung der ersten Zustandsinformationen ausgebildet ist.

## Beschreibung

Die Erfindung betrifft ein Datenverarbeitungsgerät zum Einsatz in einem Kommunikationsnetzwerk gemäß des Oberbegriffs des Patentanspruchs 1 und ein Ad-hoc-Netzwerk.

Datenverarbeitungsgeräte werden in Netzwerken angeordnet bzw. an Netzwerken angeschlossen, damit Informationen (Daten) zwischen den Datenverarbeitungsgeräten der Netzwerke ausgetauscht werden können. Die Datenverarbeitungsgeräte (Computer, PDAs, Server, Drucker, Gateways, etc.), auch die als Datenverarbeitungsgeräte ausgebildeten Kommunikations-Komponenten (Telefone, VoIP-Telefone, Vermittlungssysteme, etc.), weisen dabei jeweils eine eindeutige Adresse auf, wobei anhand dieser Adressen jedes Netzelement (Datenverarbeitungsgerät) mit einem anderen Netzwerkelement im dem gleichen Netzwerk Informationen austauschen kann.

In Netzwerken sind neben den Datenverarbeitungsgeräten häufig zentrale Dienste, die oft auch als "Server" bezeichnet werden bzw. auf "Servern" installiert sind, angeordnet, wobei die zentralen Dienste von Anwendungen, die auf den einzelnen Datenverarbeitungsgeräten installiert sind, genutzt werden. Dabei werden zwischen einem solchen zentralen Dienst und einer den zentralen Dienst nutzenden Anwendung Informationen ausgetauscht. Üblicher Weise steht ein- und derselbe zentrale Dienst mehreren Anwendungen und damit mehreren Datenverarbeitungsgeräten zur Nutzung zur Verfügung, beispielsweise werden in einem als zentralen Dienst ausgeführten E-Mail-Server alle elektronischen Nachrichten (E-Mails, etc.) gespeichert und vermittelt, die von den Anwendungen (in diesem Fall sind das E-Mail-Programme) der angeschlossenen Datenverarbeitungsgeräte ausgetauscht werden.

Ein Sonderfall der beschriebenen Netzwerke sind die sog. "Ad-hoc-Netzwerke", wobei die in einem Ad-hoc-Netzwerk angeordneten Datenverarbeitungsgeräte häufig wechseln. Ein Beispiel für ein solches Ad-hoc-Netzwerk sind die sog. "WLAN-HotSpots", bei denen alle Datenverarbeitungsgeräte, die sich innerhalb der Funkreichweite der Sende-/Empfangseinrichtung befinden, Teil des Ad-hoc-Netzwerks sein können. Datenverarbeitungsgeräte, insbesondere solche mit einem drahtlosen Anschluss zur Datenübertragung, können dabei auch ohne eine zentrale Infrastruktur ("Hot-Spot") ein Ad-hoc-Netzwerk bilden, sobald zumindest zwei Datenverarbeitungsgeräte miteinander in Verbindung treten bzw. Informationen austauschen können. Ein weiteres Beispiel für die Ad-hoc-Netzwerke stellen die sog. Peer-to-Peer-Netzwerke dar, bei denen einige (zumindest zwei) Datenverarbeitungsgeräte eines beliebig großen Netzwerks (z. B. das Internet) in eine logische Beziehung zueinander treten. Solche Peer-to-Peer-Netzwerke werden beispielsweise häufig zum Dateiaustausch verwendet, oder aber auch für die Sprachdatenkommunikation ("VoIP-Telefonie"), ohne dabei ein leitungsvermitteltes Netzwerk (Telefonnetzwerk) zu verwenden.

Bei den Ad-hoc-Netzwerken hat sich als nachteilig erwiesen, dass die üblicher Weise verwendeten und auf den Datenverarbeitungsgeräten installierten Anwendungen mit einer Datenschnittstelle für einen zentralen Dienst oder für wenige zentralen Diensten ausgerüstet sind. Wenn ein solches Datenverarbeitungsgerät mit einer solchen Anwendung in ein (anderes) Ad-hoc-Netzwerk eingebracht wird, kann die Anwendung in diesem Ad-hoc-Netzwerk nur dann erfolgreich betrieben werden, wenn in diesem Ad-hoc-Netzwerk ein entsprechender zentraler Dienst verfügbar bzw. erreichbar ist.

Im Beispiel der E-Mail-Server heißt das, dass alle E-Mail-Anwendungen in dem Ad-hoc-Netzwerk eine Verbindung zu einem E-Mail-Server haben müssen, wobei verständlicher Weise sichergestellt sein muss, dass in dem jeweiligen Ad-hoc-Netzwerk überhaupt ein solcher E-Mail-Server vorhanden bzw. erreichbar ist. Bei einem Wechsel eines Datenverarbeitungsgerätes in eine anderes Netzwerk bzw. Netzsegment müssen dabei die Kommunikationsadressen der zentralen Server, soweit überhaupt erreichbar, neu administriert werden, was einen erheblichen, oft manuell zu bewältigenden Aufwand zur Folge hat.

Ein Beispiel für einen solchen, üblicherweise von einem zentralen Server angebotenen Dienst ist der sog. Presence-Dienst. So ist beispielsweise in der Anwendung "Microsoft Windows Messenger" ein solcher Presence-Dienst realisiert, wobei ein Benutzer eines Computers, also eines zur Kommunikation verwendeten Datenverarbeitungsgerätes, in einem Bildschirm-Fenster sehen kann, welcher seiner Freunde und Bekannten ("Bodies") gerade "online" ist, also gerade per E-Mail erreichbar ist, oder nicht. Auch in den VoIP-Kommunikations-netzwerken (VoIP = Voice over Internet Protocol) sind solche Presence-Anwendungen bekannt, bei denen der Betriebszustand eines Datenverarbeitungsgerätes (hier: VoIP-Endgerät) aus einem zentralen Server jeweils abgerufen wird und bei einem diesen Dienst "abbonierenden" Kommunikationsendgerät zur Anzeige bringt. Falls einem Benutzer mehrere Kommunikationsendgeräte (Telefon, Mobilfunkgerät, etc.) zugeordnet sind, kann anhand der Informationen aus dem Presence-Server die derzeit gültige Kommunikationsadresse (Telefonnummer) ausgelesen werden. Gerade beim Presence-Dienst hat sich als nachteilig erwiesen, dass ein Benutzer bzw. dessen derzeit genutztes Kommunikationsendgerät (Datenverarbeitungsgerät) bei einem ihm zugeordneten Presence-Server angemeldet sein muss, während ein anderer Benutzer bzw. dessen Kommunikationsendgerät (Datenverarbeitungsgerät), der Informationen über den ersten Benutzer bzw. dessen Datenverarbeitungsgerät gelangen will, diese Informationen genau bei dem dem ersten Benutzer zugeordneten Presence-Server beziehen muss. Dies führt besonders in den Fällen zu Problemen, in denen ein Benutzer einen mobilen Computer in einem anderen Netzwerk bzw. in einem anderen Netz-Segment einsetzt, in welchem der zugeordnete Presence-Server bzw. überhaupt kein Presence-Server zur Verfügung steht.

Aufgabe der Erfindung ist es, die Funktion serverbasierter Anwendungen in Kommunikations-Netzwerken, insbesondere in Ad-hoc-Netzwerken, zu verbessern, und den Administrationsaufwand in solchen Kommunikations-Netzwerken zu verringern.

Die Aufgabe wird für das Datenverarbeitungsgerät durch die Merkmale des Patentanspruchs 1 und für das Ad-hoc-Netzwerk durch die Merkmale des Patentanspruchs 14 gelöst.

Die Lösung sieht ein Datenverarbeitungsgerät zum Einsatz in einem Ad-hoc-Netzwerk vor, mit einer Anwendung zur Verarbeitung von Zustandsinformationen, wobei das Datenverarbeitungsgerät mit einer ersten Datenbank zur Speicherung eigener Zustandsinformationen ausgestattet ist, das Datenverarbeitungsgerät mit einer zweiten Datenbank zur Speicherung von weiteren Zustandsinformationen der weiteren Datenverarbeitungsgeräte ausgestattet ist, das Datenverarbeitungsgerät mit einer Benachrichtigungseinrichtung zur Übermittlung der eigenen Zustandsinformationen an die weiteren Datenverarbeitungsgeräten ausgerüstet ist, und die Anwendung mittels einer Schnittstelle mit der ersten und mit der zweiten Datenbank verbunden ist, wobei die Anwendung zur Weiterverarbeitung der weiteren Zustandsinformationen und zur Generierung der ersten Zustandsinformationen ausgebildet ist. Durch den Einsatz eines solchen Datenverarbeitungsgerätes ist der Zugriff auf Zustandsinformationen auch in solchen Kommunikations-Netzwerken sichergestellt, in denen die Anwendung auf keinen bereits vorhandenen zentralen Server Zugriff hat.

Die Lösung sieht weiter ein Ad-hoc-Netzwerk vor, wobei in dem Ad-hoc-Netzwerk mehrere Datenverarbeitungsgeräte gemäß einem der Ansprüche 1 bis 13 angeordnet sind, und das Ad-hoc-Netzwerk ein Multicast-Segment bildet. Zumindest ein erstes der Datenverarbeitungsgeräte bietet in dem Ad-hoc-Netzwerk für die weiteren Datenverarbeitungsgeräte des Ad-hoc-Netzwerks die Funktion eines Presence-Servers an. Dadurch kann eine zentrale Funktion, z.B. die Presence-Funktion, auch in spontan konfigurierten Netzsegmenten genutzt werden. Wenn dabei das erste Datenverarbeitungsgerät eine Verbindung zu zumindest einem Presence-Server eines weiteren Multicast-Segmentes aufweist, und dabei über diese Verbindung wechselseitig Zustandsinformationen austauschbar sind, lässt sich auch in segmentierten größeren Ad-hoc-Netzwerken ein übergreifender Presence-Dienst realisieren.

Vorteilhafte Ausgestaltungen des erfindungsgemäßen Datenverarbeitungsgerätes sind in den Unteransprüchen 2 bis 13 angegeben, wobei deren Merkmale und Vorteile sinngemäß auch für das erfindungsgemäße Ad-hoc-Netzwerk gelten.

Wenn das Datenverarbeitungsgerät eine Abfrageeinrichtung zur Abfrage der weiteren Zustandsinformationen von den weiteren Datenverarbeitungsgeräten aufweist, ist ein gezieltes Abfragen der Zustandsinformationen von den weiteren Datenverarbeitungsgeräten möglich.

Wenn das Datenverarbeitungsgerät zum Einsatz in einem Ad-hoc-Netzwerk ausgestaltet ist, wobei das Datenverarbeitungsgerät Mittel zum Auffinden von Kommunikationsadressen der weiteren Datenverarbeitungsgeräte aufweist, können auch in Ad-hoc-Netzwerken mit häufig wechselnden "Teilnehmern" Anwendungen genutzt werden, die sich auf zentrale Dienste bzw. Server stützen. Dabei verringert sich der Administrationsaufwand, wenn das Datenverarbeitungsgerät über eine Registrierungseinrichtung zur Registrierung der weiteren Datenverarbeitungsgeräte verfügt, wobei die Übermittlung der eigenen Zustandsinformationen an die registrierten der weiteren Datenverarbeitungsgeräte erfolgt. Vorteilhafter Weise wird von den aufgefundenen Datenverarbeitungsgeräten eines bestimmt, welches für das Ad-hoc-Netzwerk die Funktion eines Presence-Servers übernimmt.

Eine häufig genutzte Anwendung wird unterstützt, wenn die Zustandsinformationen Informationen den Betriebszustand eines Datenverarbeitungsgerätes und / oder Presence-Informationen über einen Benutzer umfassen. Dabei können besonders dann bereits bekannte und bewährte Anwendungen genutzt werden, wenn die Schnittstelle eine Anwendungsschnittstelle gemäß des SIP-Protokolls ist und / oder die Anwendung eine Presence-Anwendung ist.

Indem das Datenverarbeitungsgerät (DV1, ..., DV13) die Zustandsinformationen durch Multicast-Meldungen und / oder per Broadcast-Meldungen an die weiteren Datenverarbeitungsgeräte (DV1, ..., DV13) übermittelt, können Zustandsinformationen auch ohne vorherige Anforderung verteilt werden. Wenn das Datenverarbeitungsgerät dabei mit den weiteren Datenverarbeitungsgeräten Teil eines Multicast-Segmentes des Kommunikations-Netzwerks ist, kann auf einfache Weise auf die weiteren Datenverarbeitungsgeräte desselben Multicast-Segmentes zugegriffen werden, ohne die Netzlast in den anderen Segmenten zu erhöhen. Ebenso versendet die Abfrageeinrichtung vorteilhafter Weise Multicast-Abfragenachrichten an die weiteren Datenverarbeitungsgeräte, um mit einer einzigen Abfragenachricht alle weiteren Datenverarbeitungsgeräte zu erreichen.

Ein einfacher technischer Aufbau ergibt sich, wenn die erste und die zweite Datenbank von einer gemeinsamen Datenbank gebildet werden. Dabei sind die erste und die zweite Datenbank zur Speicherung von jeweiligen Ablaufzeitinformationen zu den Zustandsinformationen ausgebildet, wobei nach Ablauf der Ablaufzeit die jeweiligen Zustandsinformationen verworfen sind.

Dadurch wird die Verwendung veralteter Zustandsinformationen vermieden.

Wenn das Datenverarbeitungsgerät für die weiteren Datenverarbeitungsgeräte die Funktion eines Presence-Servers anbietet, können auch mit solchen Datenverarbeitungsgeräten Zustandsinformationen ausgetauscht werden, die nicht selbst einen Presence-Server darstellen.

Der Austausch von Zustandsinformationen ist nicht auf das eigene Netzsegment (Multicast-Segment) beschränkt, wenn das Datenverarbeitungsgerät eine Schnittstelle zu einem wohlbekannten Presence-Server aufweist, wobei vorteilhafter Weise der Presence-Server Teil eines weiteren Multicast-Segmentes des Kommunikations-Netzwerks ist.

Ausführungsbeispiele für ein erfindungsgemäßes Datenverarbeitungsgerät werden nachfolgend anhand der Zeichnungen erläutert und dienen gleichzeitig der Erläuterung von Ausführungsbeispielen erfindungsgemäßer Ad-hoc-Netzwerke. Dabei zeigt:
- Figur 1: ein Kommunikationsnetzwerk mit Datenverarbeitungsgeräten und darauf installierten Anwendungen zur Verarbeitung von Zustandsinformationen,
- Figur 2: ein Kommunikations-Netzwerk mit Datenverarbeitungsgeräten, von denen eines einen Presence-Server für weitere Datenverarbeitungsgeräte bildet, und
- Figur 3: ein Kommunikations-Netzwerk, welches aus mehreren Multicast-Segmenten besteht, die jeweils mit Datenverarbeitungsgeräten ausgestattet sind.

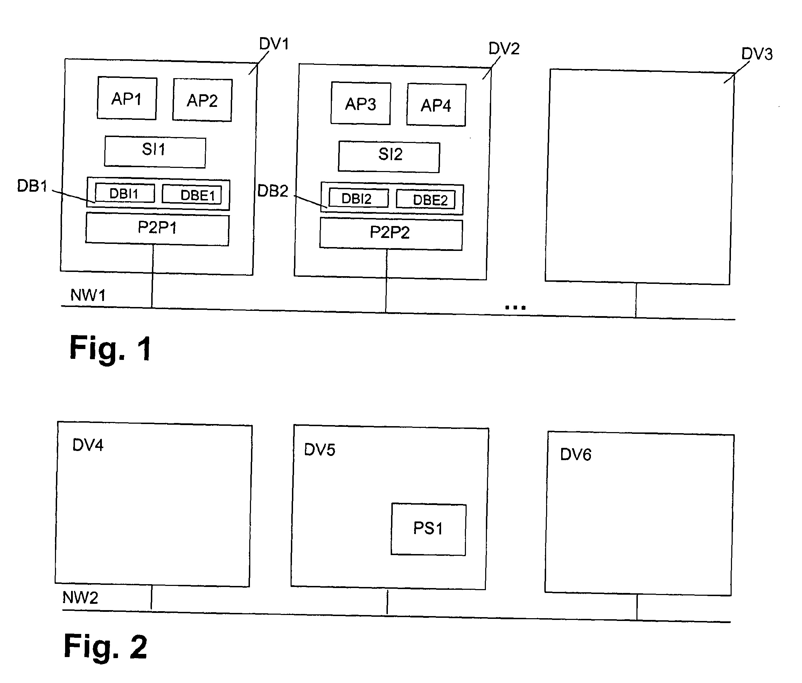

In der Figur 1 sind die Datenverarbeitungsgeräte DV1, DV2, DV3 schematisch dargestellt, die mittels des Kommunikations-Netzwerks NW1 miteinander verbunden sind. Das Kommunikations-Netzwerk NW1 ist dabei ein drahtloses Datennetzwerk, ein sog.

Wireless-LAN; selbstverständlich kann alternativ auch ein anderes, z.B. drahtgebundenes Netzwerk verwendet werden. Die Datenverarbeitungsgeräte sind hierbei mobile Computer ("Laptops", "PDAs"), die mittels Mikrofon, Lautsprecher und entsprechender Software als Kommunikationsendgerät ("Softphone") nutzbar sind. Alternativ können jedoch auch andere netzwerkfähige Geräte, beispielsweise Mobiltelefone (insbesondere solche mit Netzwerkinterface, z.B. Bluetooth-, GPRS- oder UMTS- Schnittstelle), verwendet werden. Die Datenverarbeitungsgeräte DV1, DV2, DV3 können direkt nach ihrer Verbindung mit dem Netzwerk NW1, also ohne weiteren administrativen Aufwand, Daten (Informationen) miteinander austauschen; man spricht daher bei dem Netzwerk NW1 auch von einem "Ad-hoc-Netzwerk". Besonders geeignet für solche Ad-hoc-Netzwerke sind dabei die Bluetooth-Funktechnologie und der WLAN-Standard, weil diese drahtlosen Übertragungs-Techniken die spontane ("Ad-hoc") Vernetzung räumlich benachbarter Datenverarbeitungsgeräte vereinfachen.

Das Datenverarbeitungsgerät DV1 ist über das Netzwerk - Interface P2P1 ("Peer-to-Peer-Interfacel") mit entsprechenden Netzwerk-Schnittstellen der Datenverarbeitungsgeräte DV2, DV3 über Verbindungskanäle verbunden. Das Datenverarbeitungsgerät DV1 besteht aus einer Computer-Hardware, deren Benutzerinterface durch die Anwendungen AP1, AP2 gebildet wird. Bei der Anwendung AP1 handelt es sich um eine Kommunikationsanwendung, hierbei konkret um ein durch Software gebildetes Voiceover-IP-Telefon, ein sog. "IP-Softphone". Die Anwendung AP2 ist eine sog. Messenger-Anwendung, also eine Anwendung für eine textbasierte Chat-Kommunikation, bei der die tatsächlichen und potentiellen Kommunikationspartner in Auswahlfenstern einer Anzeigevorrichtung angezeigt werden und per "Mouse-Klick" ausgewählt werden können. Die Anwendungen AP1, AP2 sind über die Schnittstelle SI1 (SI = "SIP-Interface") mit der Datenbank DB1 verbunden, wobei die Datenbank DB1 aus den Teil-Datenbanken DBI1, DBE1 besteht. Die Teil-Datenbank DBI1 ist dabei zur Speicherung von Zustandsinformationen über das Datenverarbeitungsgerät DV1 bzw. dessen Benutzer vorgesehen (DBI = Data base internal), während die Teil-Datenbank DBE1 für das Speichern bzw. zwischenspeichern von Zustandsinformationen der weiteren Datenverarbeitungsgeräte DV2, DV3 bzw. deren Benutzer eingerichtet ist (DBE = Data base external).

Die weiteren Datenverarbeitungsgeräte DV2, DV3 entsprechen in ihrem Aufbau dem Datenverarbeitungsgerät DV1, so dass auf eine detaillierte Beschreibung der dabei analogen Komponenten an dieser Stelle verzichtet wird.

Die Anwendungen AP1, AP2, AP3, AP4 tauschen Nutzinformationen, Signalisierungsinformationen und Zustandsinformationen gemäß des SIP-Protokolls (SIP = Session Initiation Protocol) aus. Dementsprechend sind die Schnittstellen SI1, SI2 ebenfalls gemäß des SIP-Protokolls ausgestaltet. Anstelle der Anwendungen AP1, AP2, AP3, AP4 können an die Schnittstellen SI1, SI2 auch sog. Stellvertreter-Module (AP = "Applikations-Proxies") angekoppelt sein, die für eine andere, externe Anwendung stellvertretend auf die Schnittstellen SI1, SI2 und somit auf die Datenbanken DB1, DB2 zugreifen.

Im Folgenden sei angenommen, dass die Anwendungen AP1, AP2, AP3, AP4 über die Schnittstellen SI1, SI2 mit den Datenbanken DB1, DB2 in der gleichen Weise Zustandsinformationen "(Presence-Stati") austauschen, wie es mit einem "eigenständigen" Presence-Server gemäß des SIP-Protokolls üblich ist. Anstelle des SIP-Protokolls kann selbstverständlich auch ein anderer Kommunikations-Standard verwendet werden. Die Anwendungen AP1, AP2, AP3, AP4 melden sich über die Schnittstellen SI1, SI2 bei den Datenbanken DB1, DB2 mit ihrer KommunikationsAdresse (URI = Uniform Ressource Identificator) an. Dabei und bei jeder (weiteren) Zustandsänderung werden in die Datenbank DB1, DB2 bzw. in die Teil-Datenbanken DBI1, DBI2 Zustandsinformationen über die Anwendungen AB1, AB2, AB3, AB4 bzw. deren Benutzer eingespeichert. Diese Zustandsinformationen sind von anderen Benutzern bzw. deren Datenverarbeitungsgeräten DV1, DV2, DV3 bzw. den darauf installierten Anwendungen AP1, AP2, AP3, AP4 durch Abfrageeinrichtungen abrufbar, sofern eine Berechtigung dafür existiert. Konzepte für eine dabei erforderliche Authentifizierung und für die Vergabe von Schreib- und Leserechten sind allgemein bekannt und werden daher an dieser Stelle nicht weiter vertieft.

Die Netzwerkschnittstellen P2P1, P2P2 weisen Mittel auf, um Datenverarbeitungsgeräte DV1, DV2, DV3 des Netzwerks NW1 aufzufinden und dabei deren Kommunikationsadressen in Erfahrung zu bringen. Dazu senden die Netzwerkschnittstellen P2P1, P2P2 in regelmäßigen Zeitabständen Suchmeldungen (Broadcast-Meldungen, Multicast-Meldungen) über das Netzwerk NW1 aus bzw. reagieren auf empfangene Suchmeldungen. Aufgefundene Datenverarbeitungsgeräte und deren Eigenschaften, insbesondere die auf den aufgefundenen Datenverarbeitungsgeräten DV1, DV2 installierte Anwendungen AP1, AP2, AP3, AP4, werden in den Teil-Datenbanken DBE1, DBE2 mittels einer (nicht dargestellten) Registrierungseinrichtung registriert, so dass die Anwendung AP1, AP2, AP3, AP4 über die Schnittstellen SI1, SI2 jeweils Informationen darüber gewinnen und anzeigen können, welche Datenverarbeitungsgeräte DV1, DV2, DV3 und welche Anwendungen AP1, AP2, AP3, AP4 derzeit im Netzwerk NW1 erreichbar sind. Nach entsprechenden Benutzer-Eingaben "abboniert" die Anwendung AP1, AP2, AP3, AP4 bei den Datenbanken DB1, DB2 Zustandsinformationen über gewünschte Benutzer bzw. Anwendungen AP1, AP2, AP3, AP4.

Nachfolgend wird beispielhaft die "Überwachung" der Anwendung AP3 durch die Anwendung AP1 aufgezeigt. Der Benutzer der Anwendung AP1 bekommt in einem Auswahlfenster die in dem Netzwerk NW1 verfügbaren anderen Anwendungen AP2, AP3, AP4 bzw. die Namen der Benutzer dieser Anwendungen angezeigt und entscheidet sich dabei, den Zustand der Anwendung AP3 zu überwachen. Diese Anforderung wird von der Anwendung AP1 über die Schnittstelle SI1 in der Teil-Datenbank DB1 abgelegt. Eine Abfrageeinrichtung (in der Figur 1 nicht dargestellt) des Datenverarbeitungsgerätes DV1 versendet daraufhin über die Netzwerkschnittstelle P2P1 und über das Netzwerk NW1 und weiter über die Netzwerkschnittstelle P2P2 an die Datenbank DB2 eine entsprechende Anforderungsmeldung, wobei dann in der Datenbank DB2 dieser "Überwachungsauftrag" registriert wird. In der Teildatenbank DBI2 liegt jeweils der aktuelle Zustand (Zustandsinformation) der Anwendung AP3 vor, wobei zumindest bei jeder Zustandsänderung auf umgekehrtem Wege die jeweilige (neue) Zustandsinformation über die Schnittstelle SI1 (Anwendungsschnittstelle) zu der Anwendung AP1 übertragen wird. Dazu ist das Datenverarbeitungsgerät DV2 genau wie die weiteren Datenverarbeitungsgeräte DV1, DV3, mit einer (hier nicht dargestellten) Benachrichtigungseinrichtung versehen. Die Zustandsinformation wird nun verarbeitet, indem der entsprechende Zustand der Anwendung AP3 durch die Anwendung AP1 gespeichert und angezeigt wird.

Die Zustandsinformation kann dabei die Zustände "online", "offline", "besetzt", "anwesend", "ausser Haus" etc. annehmen. Insbesondere in den Fällen, in denen eine Aussage über den Benutzer der Anwendung AP3 gemacht wird ("anwesend", "ausser Haus" etc.), spricht man bei den Zustandsinformation auch von "Presence-Informationen" ("Anwesenheitsinformationen").

Alternativ können die Datenverarbeitungsgeräte DV1, DV2, DV3 so eingestellt sein, dass diese generell jede Zustandsänderungen ihrer Anwendungen AP1,..,AP4 per Broadcast-Meldung oder per Multicast-Meldung an alle (erreichbaren) Datenverarbeitungsgeräte DV1, DV2, DV3 versenden. Im Falle der Broadvast-Meldung entfällt die vorherige Suche nach anderen Datenverarbeitungsgeräten, und der Vorgang des "abbonierens" vereinfacht sich, weil eine "abbonierende" Anwendung nur die Überwachung bei der Datenbank des eigenen Datenverarbeitungsgerätes beauftragen muss. Dieses Vorgehen eignet sich insbesondere in Netzsegmenten mit wenigen Datenverarbeitungsgeräten bzw. geringen Sicherheitsanforderungen und wird vorteilhaft als "Default"-Einstellung verwendet.

Die in den Datenbanken DB1, DB2 gespeicherten Zustandsinformationen weisen eine vorbestimmte maximale Gültigsdauer aus, hier: 10 Minuten. Dazu ist zu jedem Eintrag (Zustandsinformation) eine Ablaufzeitinformation gespeichert, nach deren Verstreichen der Eintrag ungültig wird, sofern er nicht durch eine erneute, gleichlautende Zustandsinformation erneuert oder durch eine Abmeldenachricht als ungültig markiert wird.

Bei der vorstehend beschriebenen Architektur ist jedes Datenverarbeitungsgerät DV1, DV2, DV3 mit Komponenten versehen, welche den jeweils installierten Anwendungen AP1, AP2, AP3, AP4 einen eigenständigen Presence-Server "simulieren". Dies ist in Netzen mit wenigen Datenverarbeitungsgeräten, insbesondere in Ad-hoc-Netzwerken (z. B. W-LAN-Hotspots) sinnvoll. In Netzwerken oder Teil-Netzwerken (Broadcast-Segmente, Multicast-Segmente) mit vielen Datenverarbeitungsgeräten und dementsprechend vielen überwachten Anwendungen muss allerdings in jeder Datenbank bzw. in jeder Teil-Datenbank für externe Zustandsinformationen eine große Datenmenge verwaltet werden; außerdem ist die Netzlast beim Versenden der Zustandsänderungs-Meldungen per "Multicast" sehr hoch. In diesen Fällen bietet sich die Verwendung einer hierarchischen Struktur an, bei der ein ausgewähltes der Datenverarbeitungsgeräte die Funktion eines Presence-Servers übernimmt. Eine solche Anordnung ist schematisch in der Figur 2 dargestellt, bei der das Datenverarbeitungsgerät DV5 den zentralen Presence-Server PS1 bildet. Im vorliegenden Ausführungsbeispiel sind die Datenverarbeitungsgeräte DV4, DV5, DV6 in der gleichen Weise ausgebildet wie die Datenverarbeitungsgeräte DV1, DV2, DV3 aus der Figur 1. Dementsprechend ist jedes Datenverarbeitungsgerät DV4, DV5, DV6 in der Lage, für die Datenverarbeitungsgeräte DV4, DV5, DV6 des Netzwerks NNW2 die Funktion des zentralen Presence-Servers zu übernehmen. Durch ein sog. Handshake-Verfahren, auf das an dieser Stelle nicht detailliert eingegangen werden soll, handeln die geeigneten Datenverarbeitungsgeräte DV4, DV5, DV6 untereinander aus, welches der Datenverarbeitungsgeräte den Presence-Server bilden soll. Beispielsweise kann dabei dasjenige Datenverarbeitungsgerät mit den größten freien Ressourcen (Systemspeicher, Prozessorauslastung etc.) ausgewählt werden.

Das ausgewählte Datenverarbeitungsgerät DV5 bzw. der von diesem gebildete ("simulierte") Presence-Server PS1 nimmt über das Netzwerk NW2 (ein TCP/IP-Netz) Zustandsinformationen der anderen Datenverarbeitungsgeräte DV4, DV6 ("Peers") entgegen und versendet in regelmäßigen Zeitabständen partielle und vollständige Zustandsinformationen per Multicast-Zustandsmeldung bzw. Zustandsänderungs-Meldung. Alternativ können die Zustandsmeldungen auch gezielt an diejenigen Datenverarbeitungsgeräte gesendet werden, die vorher die Überwachung einer entsprechenden in dem Presence-Server PS1 registrierten Anwendung "abboniert" haben.

Größere Kommunikationsnetzwerke sind meist in mehrere sog. Multicast-Segmente unterteilt, so dass Broadcast- und Multicast-Nachrichten nicht an alle Datenverarbeitungsgeräte des gesamten Kommunikations-Netzwerks versendet werden können. Damit wird zum einen das Auffinden anderer Datenverarbeitungsgeräte in anderen Multicast-Segmenten verhindert, um zum anderen erreichen Zustandsinformationen, die per Multicast-Nachricht versendet werden, immer nur einen Teil der Datenverarbeitungsgeräte.

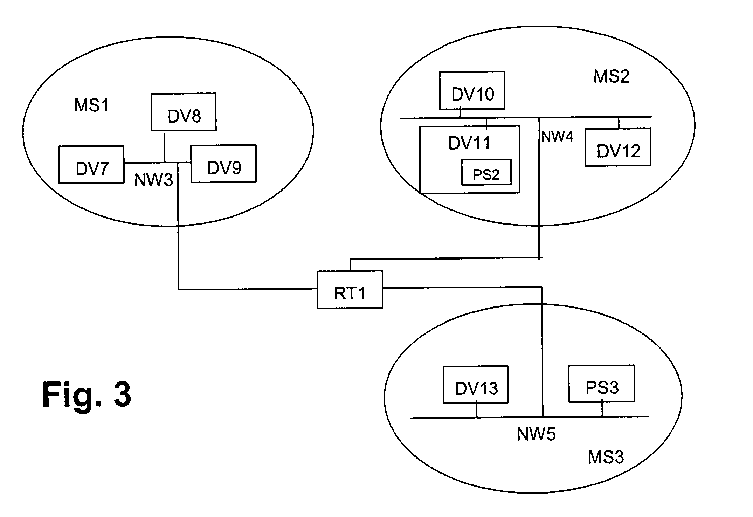

Eine solches Kommunikationsnetzwerk zeigt die Figur 3, wobei über einen Router RT1 die Multicast-Segmente MS1, MS2, MS3, also die Teil-Netzwerke NW3, NW4, NW5, miteinander verbunden sind. Während das Multicast-Segment MS1 mit den Datenverarbeitungsgeräten DV7, DV8, DV9 der aus der Figur 1 bekannten Anordnung entspricht, entsprechen die Datenverarbeitungsgeräte DV10, DV11, DV12 den aus der Figur 2 bekannten Datenverarbeitungsgeräten DV4, DV5, DV6, wobei das Datenverarbeitungsgerät DV11 für das Multicast-Segment MS2 den Presence-Server PS2 bildet. Im Multicast-Segment MS3 ist das Datenverarbeitungsgerät DV13 und ein "eigenständiger" Presence-Server PS3 angeordnet, wobei der Presence-Server PS3 zur Verwaltung der Zustandsinformationen aller Datenverarbeitungsgeräte DV7,...,DV13 des gesamten Kommunikations-Netzwerks ausgelegt ist. Hierbei sind die Datenbanken der Datenverarbeitungsgeräte DV7, DV8, DV9, der Presence-Server PS2 des Teil-Netzwerks NW4 sowie das Datenverarbeitungsgerät DV13 bei dem Presence-Server PS3 angemeldet. Der Austausch von Zustandsmeldungen mit dem Presence-Server PS3 geschieht dabei nicht durch Multicast-Meldungen, sondern durch direkt adressierte Meldungen (Datenpakete), so dass diese auch durch den Router RT1 über die Grenzen der einzelnen Multicast-Segmente hinweg übertragen werden. Dazu weisen die Datenverarbeitungsgeräte DV7, DV8, DV9, DV14 eine Schnittstelle zu dem Presence-Server PS3 auf, wobei diese Schnittstelle im vorliegenden Fall auf dem SIP-Protokoll basiert.

Die Datenverarbeitungsgeräte DV1, .., DV13 können also zum einen ohne vorherige Administration Zustandsinformationen per Broadcast-Meldung oder per Multicast-Meldung an jedes erreichbare weitere Datenverarbeitungsgerät DV1, .., DV13 versenden und ebensolche Meldungen empfangen und verarbeiten ("reiner Ad-hoc-Modus"). Zum anderen können die Datenverarbeitungsgeräte DV1, .., DV13 gezielt Zustandsinformationen von ausgewählten weiteren Datenverarbeitungsgeräten DV1, .., DV13 anfordern ("abonnieren"), was voraussetzt, dass zuvor die Kommunikationsadressen dieser weiteren Datenverarbeitungsgeräte DV1, .., DV13 ermittelt werden. Weiter bieten die Datenverarbeitungsgeräte DV1, ..., DV13 die Möglichkeit, selbst einen Presence-Server zu bilden, wobei es ausreicht, wenn eines der Datenverarbeitungsgeräte DV1, .., DV13 des jeweiligen Netzsegmentes den dort erreichbaren Presence-Server bildet. Alternativ kann das ausgewählte der Datenverarbeitungsgeräte DV1, .., DV13 eine Verbindung zu einem "zentralen" Presence-Server, der auch in einem anderen Netzsegment angeordnet sein kann, aufweisen und dabei stellvertretend für die weiteren Datenverarbeitungsgeräte DV1, .., DV13 des jeweiligen Netzsegmentes mit diesem Zustandsinformationen austauschen ("relayed Ad-hoc-Modus").

## Patentansprüche

1. Datenverarbeitungsgerät (DV1, ..., DV13) zum Einsatz in einem Kommunikations-Netzwerk (NW1, ..., NW5) mit weiteren Datenverarbeitungsgeräten (DV1, ..., DV13),
mit einer Anwendung (AP1, ..., AP4) zur Verarbeitung von Zustandsinformationen,
**dadurch gekennzeichnet, dass**
• das Datenverarbeitungsgerät (DV1, ..., DV13) mit einer ersten Datenbank (DBI1, DBI2) zur Speicherung eigener Zustandsinformationen ausgestattet ist,
• das Datenverarbeitungsgerät (DV1, ..., DV13) mit einer zweiten Datenbank (DBE1, DBE2) zur Speicherung von weiteren Zustandsinformationen der weiteren Datenverarbeitungsgeräte (DV1, ..., DV13) ausgestattet ist,
• das Datenverarbeitungsgerät (DV1, ..., DV13) mit einer Benachrichtigungseinrichtung zur Übermittlung der eigenen Zustandsinformationen an die weiteren Datenverarbeitungsgeräten (DV1, ..., DV13) ausgerüstet ist, und
• die Anwendung (AP1, ..., AP4) mittels einer Schnittstelle (SI1, SI2) mit der ersten und mit der zweiten Datenbank verbunden ist, wobei die Anwendung (AP1, ..., AP4) zur Weiterverarbeitung der weiteren Zustandsinformationen und zur Generierung der ersten Zustandsinformationen ausgebildet ist.

2. Datenverarbeitungsgerät (DV1, ..., DV13) nach Patentanspruch 1,
**dadurch gekennzeichnet, dass**
das Datenverarbeitungsgerät (DV1, ..., DV13) eine Abfrageeinrichtung zur Abfrage der weiteren Zustandsinformationen von den weiteren Datenverarbeitungsgeräten (DV1, ..., DV13) aufweist.

3. Datenverarbeitungsgerät (DV1, ..., DV13) nach Patentanspruch 1 oder 2,
**dadurch gekennzeichnet, dass**
das Datenverarbeitungsgerät (DV1, ..., DV13) zum Einsatz in einem Ad-hoc-Netzwerk ausgestaltet ist, wobei das Datenverarbeitungsgerät (DV1, ..., DV13) Mittel zum Auffinden von Kommunikationsadressen der weiteren Datenverarbeitungsgeräte (DV1, ..., DV13) aufweist.

4. Datenverarbeitungsgerät (DV1, ..., DV13) nach einem der vorhergehenden Patentansprüche,
**dadurch gekennzeichnet, dass**
das Datenverarbeitungsgerät (DV1, ..., DV13) über eine Registrierungseinrichtung zur Registrierung der weiteren Datenverarbeitungsgeräte (DV1, ..., DV13) verfügt, wobei die Übermittlung der eigenen Zustandsinformationen an die registrierten der weiteren Datenverarbeitungsgeräte (DV1, ..., DV13) erfolgt.

5. Datenverarbeitungsgerät (DV1, ..., DV13) nach einem der vorhergehenden Patentansprüche,
**dadurch gekennzeichnet, dass**
die Zustandsinformationen Informationen über den Betriebszustand eines Datenverarbeitungsgerätes (DV1, ..., DV13) und /oder Presence-Informationen über einen Benutzer umfassen.

6. Datenverarbeitungsgerät (DV1, ..., DV13) nach einem der vorhergehenden Patentansprüche,
**dadurch gekennzeichnet, dass**
das Datenverarbeitungsgerät (DV1, ..., DV13) die Zustandsinformationen durch Multicast-Meldungen und / oder per Broadcast-Meldungen an die weiteren Datenverarbeitungsgeräte (DV1, ..., DV13) übermittelt.

7. Datenverarbeitungsgerät (DV1, ..., DV13) nach einem der vorhergehenden Patentansprüche,
**dadurch gekennzeichnet, dass**
die Schnittstelle (SI1, SI2) eine Anwendungsschnittstelle gemäß des SIP-Protokolls ist.

8. Datenverarbeitungsgerät (DV1, ..., DV13) nach einem der vorhergehenden Patentansprüche,
**dadurch gekennzeichnet, dass**
die Anwendung (AP1, ..., AP4) eine Presence-Anwendung ist.

9. Datenverarbeitungsgerät (DV1, ..., DV13) nach einem der vorhergehenden Patentansprüche,
**dadurch gekennzeichnet, dass**
die Abfrageeinrichtung Multicast-Abfragenachrichten und / oder Broadcast-Abfragenachrichten an die weiteren Datenverarbeitungsgeräte (DV1, ..., DV13) versendet.

10. Datenverarbeitungsgerät (DV1, ..., DV13) nach einem der vorhergehenden Patentansprüche,
**dadurch gekennzeichnet, dass**
die erste und die zweite Datenbank (DBI1, DBE1, DBI2, DBE2) von einer gemeinsamen Datenbank (DB1, DB2) gebildet werden.

11. Datenverarbeitungsgerät (DV1, ..., DV13) nach einem der vorhergehenden Patentansprüche,
**dadurch gekennzeichnet, dass**
die erste und die zweite Datenbank (DBI1, DBE1, DBI2, DBE2) zur Speicherung von jeweiligen Ablaufzeitinformationen zu den Zustandsinformationen ausgebildet sind, wobei nach Ablauf der Ablaufzeit die jeweilige Zustandsinformationen verworfen ist.

12. Datenverarbeitungsgerät (DV1, ..., DV13) nach einem der vorhergehenden Patentansprüche,
**dadurch gekennzeichnet, dass**
das Datenverarbeitungsgerät (DV1, ..., DV13) für die weiteren Datenverarbeitungsgeräte (DV1, ..., DV13) zum Anbieten der Funktion eines Presence-Servers ausgebildet ist.

13. Datenverarbeitungsgerät (DV1, ..., DV13) nach einem der vorhergehenden Patentansprüche,
**dadurch gekennzeichnet, dass**
das Datenverarbeitungsgerät (DV1, ..., DV13) eine Schnittstelle zu einem Presence-Server (PS3) aufweist.

14. Ad-hoc-Netzwerk,
**dadurch gekennzeichnet,**
**dass** in dem Ad-hoc-Netzwerk mehrere Datenverarbeitungsgeräte (DV1, ..., DV13) gemäß einem der Ansprüche 1 bis 13 angeordnet sind,
**dass** das Ad-hoc-Netzwerk ein Multicast-Segment (MS1, MS2, MS3) bildet, und dass zumindest ein erstes der Datenverarbeitungsgeräte (DV1, ..., DV13) in dem Ad-hoc-Netzwerk für die weiteren Datenverarbeitungsgeräte (DV1, ..., DV13) des Ad-hoc-Netzwerks die Funktion eines Presence-Servers (PS3) anbietet.

15. Ad-hoc-Netzwerk nach Patentanspruch 14,
**dadurch gekennzeichnet,**
**dass** das erste Datenverarbeitungsgerät (DV1, ..., DV13) eine Verbindung zu zumindest einem Presence-Server (PS3) eines weiteren Multicast-Segmentes (MS1, MS2, MS3) aufweist, und wobei über diese Verbindung wechselseitig Zustandsinformationen austauschbar sind.
